Europäisches Patentamt

European Patent Office

Office européen des brevets

(19)

(11) Publication number: **0 090 086**
**B1**

(12) **EUROPEAN PATENT SPECIFICATION**

(45) Date of publication of patent specification: **26.03.86**

(21) Application number: **82111446.9**

(22) Date of filing: **10.12.82**

(51) Int. Cl.⁴: **G 11 B 23/04,** G 11 B 15/66,
G 11 B 23/26

(54) **Single reel magnetic tape cartridge.**

(30) Priority: **26.03.82 US 362440**

(43) Date of publication of application:
**05.10.83 Bulletin 83/40**

(45) Publication of the grant of the patent:
**26.03.86 Bulletin 86/13**

(84) Designated Contracting States:
**DE FR GB IT**

(56) References cited:
**EP-A-0 027 653**
**EP-A-0 042 475**
**FR-A-1 153 503**
**GB-A-2 028 273**
**US-A-3 105 645**
**US-A-3 119 574**
**US-A-3 411 730**

(73) Proprietor: **International Business Machines
Corporation
Old Orchard Road
Armonk, N.Y. 10504 (US)**

(72) Inventor: **Richard, Maurice Edmund
4700 North Snyder Circle
Tucson Arizona 85715 (US)**
Inventor: **Winarski, Daniel James
647 South Woodstock
Tucson Arizona 85710 (US)**

(74) Representative: **Ekström, Gösta E.
IBM Svenska AB Patent Operations Box 962
S-181 09 Lidingö (SE)**

Courier Press, Leamington Spa, England.

## Description

This invention relates to single reel magnetic tape cartridges and, in particular, to cartridges containing a reel of tape with its free end projecting out of the cartridge through an opening in the peripheral wall of the cartridge, the free end being anchored to a leader block accessible externally of the cartridge and intended for transport to a location in a recess in a hub of a tape take-up reel.

Such a cartridge is described in our co-pending application No. 82101862.9 (EP—A—0062171). When the leader block is located in the recess, with tape overlaying the exposed rear surface and the hub, a problem arises due to the discontinuity arising from the folding of the first turn of tape around the corner of the leader block.

One attempt to solve this problem is disclosed in EP—A—42 475. The problem is solved by forming a portion of the cylindrical section of the hub of the tape take-up reel to function as a cantilever type beam in the area where the end of the tape first engages the cylindrical hub of the reel. Then subsequent layers of the tape have less tendency to tent since the radial pressure is reduced at the continuity by bending action of the cantilever beam. Thus a better result is received but the problem is not completely solved.

US—A—3 105 645 and US—A—3 119 574 disclose leader blocks made of resilient material which are formed to fit into recesses in the hubs of the tape take-up reels and EP—A—27 653 and GB—A—2 028 273 disclose clamping members made of resiliently deformable material and provided with cavities therein so that they can be pressed into a recess of a hub to clamp the end of a tape therein. None of these patents solves the problem that arises due to the discontinuity arising from the folding of the first turn of tape around the hub.

An object of the present invention is to provide a single reel cartridge that includes a leader block to be located in a recess in the take-up reel and to be compliant to accommodate the first layer of tape when wound on the take-up reel hub, thus overcoming the aforesaid problem.

In an embodiment of the present invention, a magnetic tape cartridge includes an approximately square box having two elongated side pieces, elongated leading edge and rear edge pieces, all interconnecting nearly flat top and bottom sections, with a tape access opening to the interior of the cartridge at one corner of the leading edge and one side piece and a drive means opening in the bottom section of the box. The tape access opening includes a leader block receiving well. The cartridge includes a reel supporting a web of magnetic tape with the free end of the magnetic tape connected to a leader block positioned for containment in the leader block receiving well. The leader block has a cutout section for attaching the free end of the tape to the leader block. The leader block also includes a cavity formed parallel to the cutout section adjacent to the rear surface and the side surface of the leader block. The leader block is shaped for attachment to an automatic threading system and is of a size to fit into a cutout in the take-up reel in a tape drive such that the rounded rear surface of the leader block is of the same radius as the hub of the leader block with the cavity and the cutout section in the leader block complying the leader block shape to the cutout in the hub of the take-up reel under the tension of the layers of tape.

For a preferred embodiment, the magnetic tape cartridge includes an approximately square box having a web of magnetic tape while on a reel positioned within the box and a leader block attached to the end of the tape. The leader block includes a slot for attachment to an automatic threading device and a cutout section in one side approximate to its rear surface for attaching the free end of the tape to the leader block. The leader block further includes cavities formed parallel to the cutout section and adjacent to its rear surface and the side surface which contains the cutout section. The leader block is of a rectangular box shape with a rounded rear surface. The leader block is of a size to fit into a cutout in a take-up reel of a tape drive with the rounded rear surface approximating the radial surface of the hub of the take-up reel with the cavities and the cutout section in the leader block being compliant to accommodate a first wrap of tape across the rounded rear surface of the leader block.

Thus, the leader block is shaped to conform to a take-up reel to provide a smooth surface by compressing under the tension of the first wrap of the tape, through which so called tenting is completely avoided.

The scope of this invention is defined by the appended claims; and how it can be carried into effect is hereinafter particularly described with reference to the accompanying drawings, in which:

FIGURE 1 is a perspective view of a reel-to-reel magnetic tape drive embodying a cartridge according to the present invention;

FIGURE 2 is a plan view of a single reel magnetic tape cartridge as shown in Fig. 1;

FIGURES 3 and 4 are bottom and side plan views, respectively, of the leader block of the cartridge of 2;

FIGURES 5A and 5B are perspective views illustrating the relative positions of the parts before and after interconnection of a coupling device to the leader block and tape cartridge shown in Fig. 1;

FIGURE 6 is a plan view of a take-up reel as shown in Fig. 1 including a leader block of the cartridge;

FIGURE 7 is a side view of layers of the tape illustrating the potential effect on segments of the tape disposed over a discontinuity;

FIGURE 8 is a schematic illustration of "tenting" of a segment of magnetic tape over a transducer head;

FIGURE 9 is a plan view, similar to Fig. 6, of another form of leader block for a tape cartridge; and

FIGURES 10 and 11 show two further embodiments of leader blocks for tape cartridges according to the present invention.

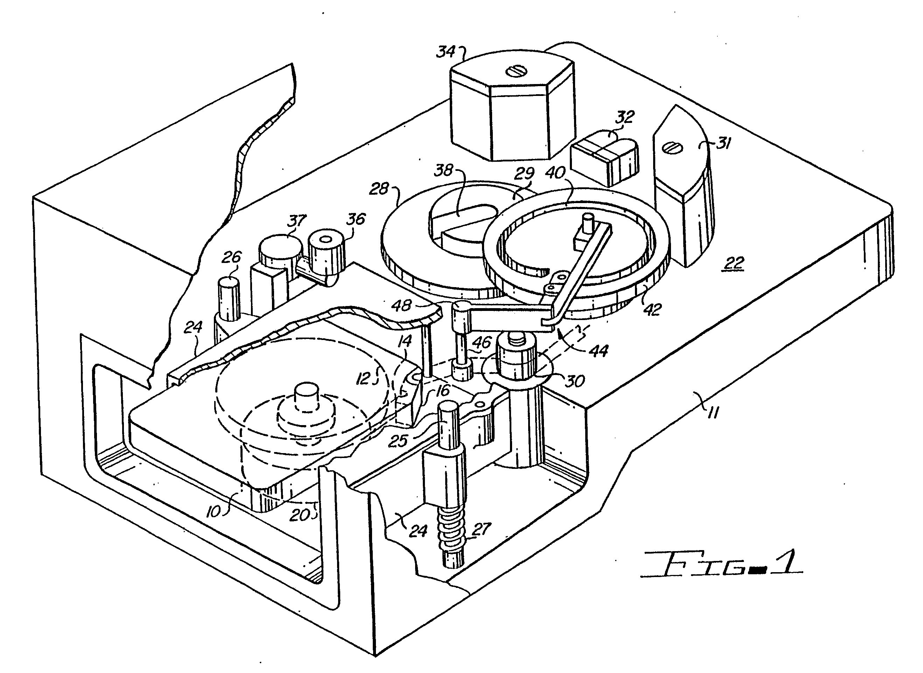

A reel-to-reel type magnetic tape drive apparatus (Fig. 1) includes tape threading apparatus for connection to a single reel to tape cartridge 10. Tape transport apparatus includes a base plate 11 on which various standard components of a magnetic tape transport are mounted. The tape cartridge 10 is replaceable and includes a reel 12 of magnetic tape 14 whose leading edge is attached to the side of a leader block 16 disposed in the cartridge and accessible externally. The cartridge 12 can be inserted into the apparatus onto a spring loaded platform 24. A drive motor 20 for the supply reel 12 is mounted beneath the loader platform 24 on the base plate 11 so that its shaft extends normal to the surface and slightly below the surface 22 of the platform in its raised position. The motor shaft is provided with a suitable clutching arrangement which permits the motor to be coupled to the hub of the supply reel 12 by movement of the cartridge 10 on the loader platform in a direction normal to the surface. This vertical movement is achieved by cartridge loading mechanism, of which the loader platform 24 is part and is movable downwardly on shafts 25 and 26 against springs 27.

A take-up reel 28 is permanently attached to the shaft of a motor (not shown) which is mounted on the base plate 11. When the cartridge and loader platform are lowered to couple the cartridge reel 12 to its motor, the reel 12 lies in substantially the same plane as a hub 29 of a take-up reel 28 so that when tape 14 is transported above surface 22, a point on the tape 14 moves in a plane normal to both motor shafts. The tape is threaded between the supply reel 12 and the take-up reel 28 past a roller guide 30, an air bearing guide 31, a magnetic transducer head 32, a second air bearing guide 34, and a roller 36 of a tension transducer 37. After threading of the tape 14, transfer of the tape for reeling, unreeling and transducing between the supply reel 12 and the take-up reel 28 is achieved by control of the respective driving motors for the reels 12 and 28. The bearing guides 31 and 34 are positioned in relation to the tape path so that the magnetic pigment side of the magnetic tape 14 slides over their air bearing surfaces with the magnetic tape 14 coacting with the magnetic head 32 to read and write magnetic transitions to and from the magnetic tape 14.

The automatic threading apparatus provides two functions. The first involves moving and guiding a coupling device from the supply reel to the take-up reel, and the second involves selectively coupling the leader block at the take-up reel in a manner to permit the leader block to be rotated with the take-up reel without being uncoupled from the threading apparatus. A threading pin 46 may be coupled to the leader block 16. The pin 46 is on part 48 of a pantograph mechanism 44 by whose rotation the moving and guiding function is implemented. The pantograph mechanism has a cam follower which follows a cam groove 40 in a cam subplate 42 to define the path which the leader block 16 and the tape 14 will follow. The threading pin 46 is coupled to the leader block 16, travels along the leader block path to the take-up reel 28 and locates the block in a recess 38 in the hub 29. This is described in more detail in our application 82106399.7 (EP—A—74476, published 23.3.83).

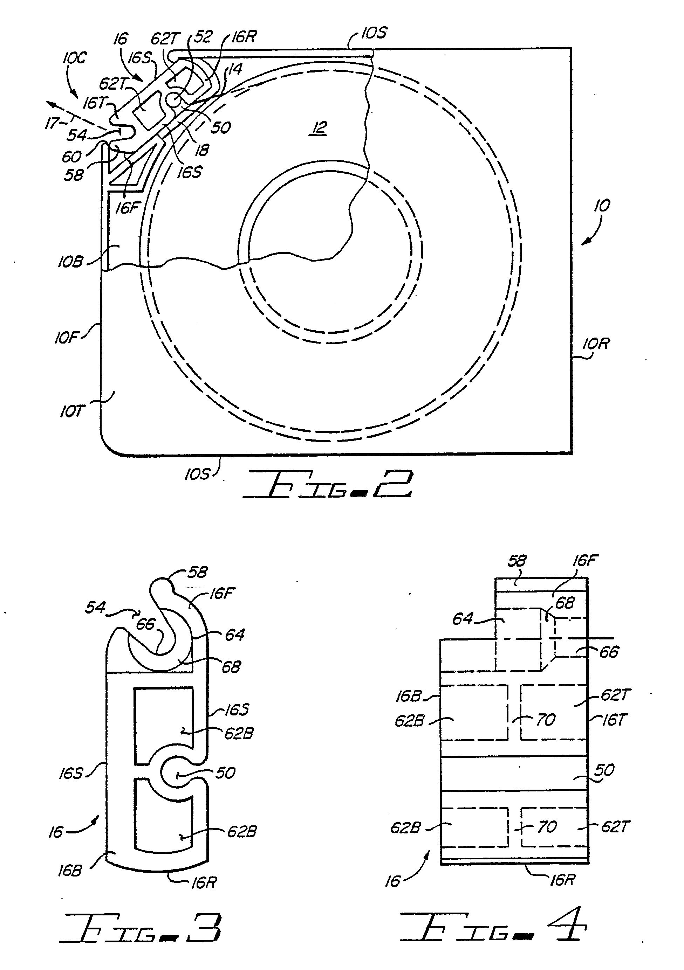

The cartridge 10 (Fig. 2) is preferably a box which includes the reel hub 12 containing a plurality of layers of the magnetic tape 14 with the leader block 16 attached to the free end of the tape 14 as it extends from the reel hub 12. The cartridge 10 is generally rectangular in shape except for one corner 10C which holds the leader block 16. The cartridge 10 is basically a box-like structure including a frontal or leading edge piece 10F, a rear edge piece 10R, two side pieces 10S, an essentially flat bottom section 10B, and an essentially flat top section 10T. The corner 10C is angled at approximately 45° relative to one adjacent side piece 10S and the leading edge piece 10F to provide a shorter fifth side in which a leader block well and window 18 are included. The leader block window 18 permits exit of the tape 14 from the cartridge 10 when the leader block 16 is removed from the corner 10C for threading through the tape drive when the leader block 16 is moved in the direction of the arrow 17. The opening 18 is covered by the leader block 16 when the leader block is snapped into the well formed at the corner 10C of the cartridge 10.

The leader block 16 can be viewed generally as a rectangular block having a leading or frontal surface 16F, a rear surface 16R, side surfaces 16S, a top surface 16T, and a bottom surface 16B opposite the top surface 16T. A cutout 50 extends normal to the top and bottom surfaces of the leader block 16 and the cartridge 10. The cutout 50 together with a pin 52 of soft plastics material form a fastening means for holding the tape 14 to the leader block 16. The tape 14 is attached to the leader block 16 such that the side surfaces 16S of the leader block are generally parallel to the plane of the tape surface and the axis of the tape reel 12. The front surface 16F of the leader block 16 includes the engaging means for engaging the automatic threading apparatus. The engaging means include a tapered slot 54 offset from the front surface 16F of the leader block 16 and extending from the top surface 16T to the bottom surface 16B of the leader block.

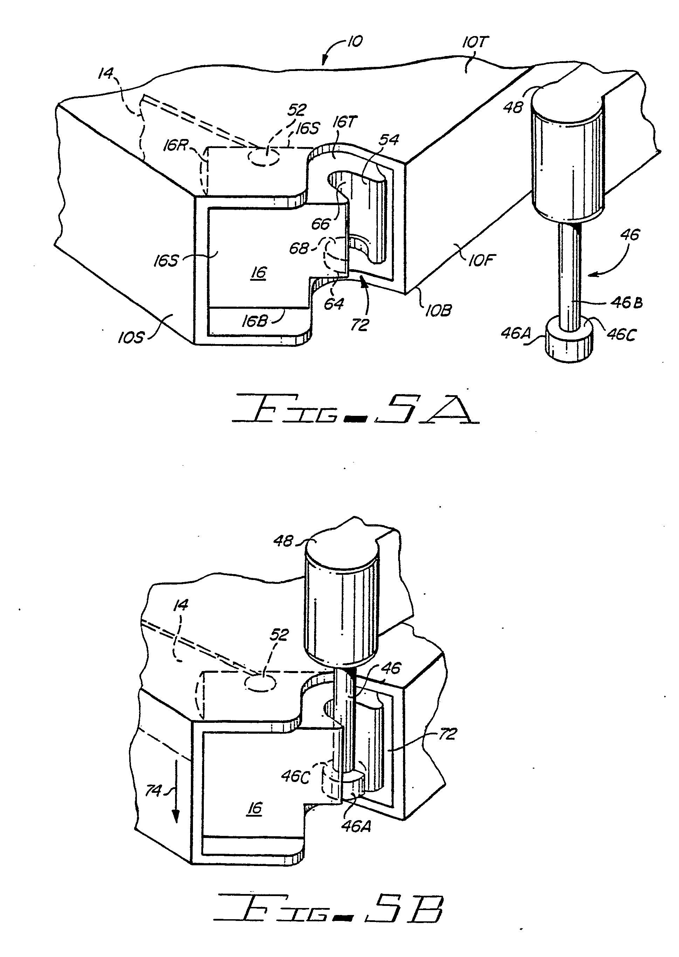

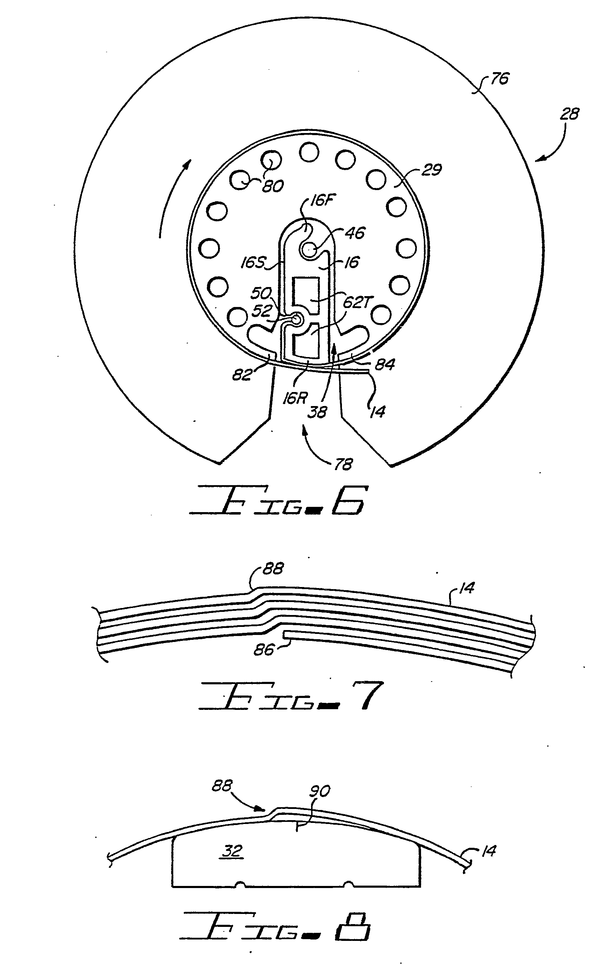

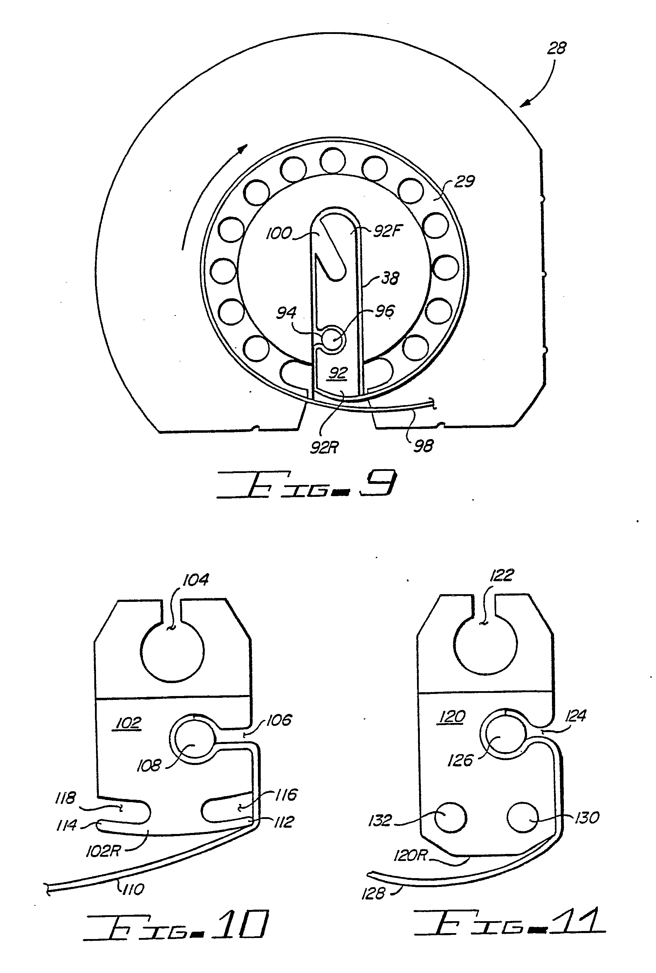

The flat sides 16S (Fig. 3) are basically flat, as are the top 16T (Fig. 4) and bottom 16B. The front surface 16F (Fig. 3) is rounded and includes the slot 54 and a rounded boss 58 which engages with an inclined surface 60 of the frontal piece 10F at the corner 10C of the cartridge 10. The rear surface 16R is slightly rounded to form a portion of an arc of a radius to match the periphery of the hub 29 as the leader block 16 fits into the slot 38 in the hub 29 (Fig. 6). The slot 54 leads to an enlarged receiving cavity 64 (Fig. 4) at the bottom of the slot 54. A tapered section 68 gradually decreases the diameter of the cavity 64 to a rounded section 66 at the bottom of the slot 54. The slot 54 as well as the cavity 64 and the tapered section 68 interface with the threading pin 46 for threading the tape 14 through the drive system.

Two pairs of cavities 62B and 62T are formed in the leader block 16 close to the rear surface 16R and at the side 16S which includes the cutout 50. The cavities 62T in the top surface 16T are separated from the cavities 62B in the bottom surface 16B by walls 70. The cavities 62B and 62T together with the cutout 50 form a compliant section that permits the leader block 16 to compress at its rear surface 16R to accommodate especially the first layer of tape when the tape is wound onto the take-up reel 28.

In Fig. 5A, the cartridge 10 is shown while being inserted onto the loader platform 24 towards the stationary threading pin 46 on part 48 of the follower linkage. The slot 54 is angled to the side surface 16S of the leader block 16 so as to face normal to the piece 10F. The top piece 10T and bottom piece 10B of the cartridge have rounded cutouts to receive the threading pin 46.

As the cartridge 10 approaches the threading pin 46, the latter enters the slot 54 with a larger diameter portion 46A below the leader block 16 and a smaller diameter portion 46B within the slot 54. The portions 46A and 46B are joined by a tapered shoulder 46C. With the cartridge located, the pin 46 lies in the rounded section 66 of the cavity 64.

The cartridge and loader platform are then moved downwardly in the direction of the arrow 74 (Fig. 5B). This places the tapered shoulder 46C and larger diameter section 46A of the pin 46 into the tapered section 68 and cavity 64, respectively, of the slot 54 of the leader block 16. By this relative motion, the leader block is positively captured by the threading pin 46 for pulling through a complex tape threading path by the threading means. At the end of threading, the pin 46 draws the leader block 16 into a recess 38 (Fig. 6) in the hub 29 of the take-up reel 28. The pin 46 is located at the rotational axis of the hub 29. One turn of the magnetic tape 14 is shown wrapped around the hub 29. The threading pin 46 remains in contact with the leader block 16. The take-up reel 28 includes a single reel flange 76 which has a cutout 78 that leads to the recess 38 in the hub 29. The recess 38 is generally U-shaped to accommodate the rectangular box-shaped leader block 16 and the rounded front surface 16F of the leader block 16. The hub 29 may include compliant holes 80 drilled through the hub as well as cantilever sections 82 and 84 formed on the periphery of a hub 29 adjacent to the slot 38. The need for the cantilever sections 82 and 84 is described more fully in application 81102646.7 (EP—A—42475).

The cantilever sections assist in the elimination of the creasing of the tape 14 (Fig. 7). There may be a sharp break 86 as the tape is bent around the corner of the leader block 16 between side surface 16S and rear surface 16R (Fig. 6). Subsequent layers (Fig. 7) of tape crease to form a "tenting" at 88. The "tenting" of the tape 14 will occur at any discontinuity formed in the periphery of the hub 29. As shown in Fig. 8 the "tenting" effect at 88 can cause a narrow section of the tape 14 to be spaced further from the flux gap 90 of the magnetic head 32 than is desirable. In order to reduce the adverse "tenting" effects that these discontinuities may have on layers of the tape which overlay the discontinuities, the cantilever sections 82 and 84 were added to the hub 29 as disclosed in the aforementioned patent application. The "tenting" effect will cause a loss of data because the magnetic transitions on the tape 14 in the "tenting" area are not close enough to the magnetic gap 90 to be read nor can information be written therein. The spacing of the discontinuity between the outer periphery of the hub 29 and the leader block 16 was reduced considerably by the formation of the hub 29 as shown in Fig. 6. However, the use of the cantilever sections 82 and 84 did not accommodate the first layer of tape 14 as it wrapped across the rear surface 16R of the leader block 16.

In the present embodiment, the cavities 62B and 62T together with the cutout 50 form a relatively compressible section to the side 16S as the first wrap of the tape 14 is wrapped under tension from the cutout 50 along the side surface 16S across the rounded surface 16R and in contact with the cantilever section 84 and then the remaining periphery of the hub 29. The hub as well as the leader block 16, is made of a material which is relatively compressible, such as polycarbonate. Therefore, as the first layer of tape is draped across the rear surface 16R and the subsequent layers of the tape 14 are wrapped under tension around the periphery of the hub 29, the side surface 16S in the leader block 16 containing the cutout section 50 will compress more than the other side. This compression will accommodate the thickness of the first layer of tape such that the first complete layer and subsequent layers of the tape ride on a smooth continuous surface. The compressibility of the leader block 16 as a result of the cavities 62 and the cutout 50 accommodates the first layer of tape as it wraps around the corner of the leader block and the cantilever sections 82 and 84 together with the compressible sections in the leader block 16 all coact to provide a generally smooth tape receiving surface.

Another embodiment of a leader block is shown in Fig. 9. A leader block 92 is shown inserted into the U-shaped recess in the hub 29 of the take-up reel 28. The leader block 92 includes a cutout section 94 in which a pin 96 is inserted for holding the magnetic tape 98. A slot 100 is included in a front surface 92F to interface with an automatic threading system as stated previously. A rear surface 92R is rounded with a radius offset from the radius of the outer periphery of the hub 29. The radius of the rear section 92R is exaggerated to identify the change. In the leader block 92, the accommodation for the first wrap of tape 98 is by virtue of the compressibility of the cutout 94 together with the offset radius of the rear section 92R.

Another embodiment of a leader block according to the present invention is shown in Fig. 10. A leader block 102 includes a slot 104 for engaging the automatic threading mechanism and a cutout 106 containing a pin 108 for holding a tape 110 to the leader block. Two cantilever sections 112 and 114 are formed by cutouts 116 and 118 respectively at the rear 102R of the leader block. The cantilever section 112 operates to accommodate for the first wrap thickness while both the cantilever sections 112 and 114 compress to provide a smooth surface for subsequent layers of the magnetic tape together with the hub of the take-up reel. The hub of the take-up reel may or may not include its own cantilever sections if the leader block is made according to the embodiment of Fig. 10. To accommodate for only the thickness of the first wrap of tape 112, only the cantilever section 112 is necessary in the leader block 102.

Yet another embodiment of a leader block according to the present invention is shown in Fig. 11. A leader block 120 includes a slot 122 for connection to an automatic threading system and a cutout 124 which accommodates a pin 126 for holding a magnetic tape 128 firmly connected to the leader block 120. In this embodiment, the leader block 120 includes cavities 130 and 132 formed at the rear surface 120R of the leader block 120. The cavities 130 and 132 may be holes drilled completely through the leader block 120 or they may be blind holes formed in one or both sides of the leader block similar to the cavities 62 (Figs. 3 and 4). The cavity 130 together with the cutout 124 provides the compressibility for the first wrap of tape according to the present invention while the cavity 132 together with the hub of the take-up reel can be used to compress and to accommodate any potential discontinuity between the leader block and the periphery of the hub. For the purposes of the present invention, only cavity 130 together with the cutout 124 are necessary for the compressibility of the leader block 120 for the accommodation of the first wrap of the tape 128.

Many different cartridge shapes as well as the interconnection of the leader block to the take-up reel can be substituted without departing from the present invention. It should be evident that the type of threading device as well as the tape path taken by the magnetic tape may be varied. The interface of the leader block with the automatic threading apparatus may be by other means other than the slot shown. Likewise, the number of cavities shown in the leader block can be changed without departing from the compressibility factor which determines the advantages of the present invention. The cavities may be through holes or may be only one in number depending upon the amount of compressibility desired. Likewise, the shape of the take-up reel and its U-shaped slot is for accommodating the particular shape of the leader block.

## Claims

1. A single reel magnetic tape cartridge (10) containing a reel (12) of tape (14) with its free end projecting out of the cartridge through an opening (18) in the peripheral wall of the cartridge, the free end being anchored to a leader block (16; 102; 120) accessible externally of the cartridge and intended for transport to and location in a recess (38) in a hub (29) of a tape take-up reel (28), the leader block (16) having a rounded rear surface (16R; 102R; 120R) which in the recess (38) completes the circumference of the hub (29) over which tape is laid, characterized in that the leader block (16; 102; 120) has cavities formed behind the rear surface (16R; 102R; 120R) to form a compliant rear sector to accommodate the first portion of the tape laid over the rear surface.

2. A cartridge according to claim 1, in which two cavities (62B, 62T) are formed in opposite surfaces (16B, 16T) of the leader block with a wall (70) separating the two opposing cavities.

3. A cartridge according to claim 1, in which the cavities (116; 118) form cantilever sections (112; 114) at the rear surface of the leader block.

## Patentansprüche

1. Eine einspulige Magnetbandkassette (10), die eine Spule (12) mit Band (14) beinhaltet, dessen freilaufendes Ende aus der Kassette durch eine Öffnung (18) herausragt, wobei das freilaufende Ende an einem Vorspannblock (16; 102; 120) befestigt ist, welcher von ausserhalb der Kassette her zugänglich ist und für den Transport zu einer Aussparung (38) und für das Einlegen in eine Buchse (29) einer Bandaufwickelspule (28) vorgesehen ist, wobei der Vorspannblock (16) eine abgerundete Rückseite (16R; 102R; 120R) hat, die in der Aussparung (38) die Kreislinie der Buchse (29) schliesst, worüber das Band gelegt wird, dadurch gekennzeichnet, dass in den Vorspannblock (16; 102; 120) hinter der Rückseite (16R; 102R; 120R) Hohlräume eingearbeitet sind, wodurch ein nachgiebiger rückwärtiger Teil gebildet wird, um den ersten Abschnitt des Bandes zu erfassen, das über die Rückseite gelegt wird.

2. Eine Kassette nach Anspruch 1, in die zwei Hohlräume (62B, 62T) in gegenüberliegenden Seiten (16B, 16T) des Vorspannblocks eingearbeitet sind mit einer Wand (70), die die gegenüberliegenden Hohlräume voneinander trennt.

3. Eine Kassette nach Anspruch 1, in der durch die Hohlräume (116; 118) an der Rückseite des Vorspannblocks überstehende Teile gebildet werden (112, 114).

## Revendications

1. Cassette à bande magnétique à une seule bobine (10) contenant une bobine (12) de bande (14) dont l'extrémité libre se projette hors de la cassette par une ouverture (18) faite dans la paroi périphérique de la cassette, l'extrémité libre étant fixée à une amorce (16, 102, 120) accessible de l'extérieur de la cassette et devant venir se placer dans un évidement (38) d'un moyeu (16) d'une bobine d'enroulement de bande (28), l'amorce (16) ayant une surface arrière arrondie (16R, 102R, 120R) qui, dans l'évidement (38), achève la circonférence du moyeu (29) sur lequel est posée la bande, caractérisée en ce que l'amorce (16, 102, 120) a des cavités formées derrière la surface arrière (16R, 102R, 120R) afin de former un secteur arrière satisfaisant la réception de la première portion de la bande posée sur la surface arrière.

2. Cassette selon la revendication 1, dans laquelle deux cavités (62B, 62T) sont formées dans les surfaces opposées (16B, 16T) de l'amorce, une paroi (70) séparant les deux cavités opposées.

3. Cassette selon la revendication 1, dans laquelle les cavités (116, 118) forment des sections en porte-à-faux (112, 114) à la surface arrière de l'amorce.

FIG-1

FIG-2

FIG-3

FIG-4

2

Fig-5A

Fig-5B

3

Fig-6

Fig-7

Fig-8

Fig-9

Fig-10

Fig-11

5